(19) Europäisches Patentamt
European Patent Office
Office européen des brevets

(11) Veröffentlichungsnummer: **0 416 567 A2**

(12) # EUROPÄISCHE PATENTANMELDUNG

(21) Anmeldenummer: **90117040.7**

(22) Anmeldetag: **05.09.90**

(51) Int. Cl.5: **C08G 61/12**, H01B 1/12

(30) Priorität: **07.09.89 DE 3929688**

(43) Veröffentlichungstag der Anmeldung:
**13.03.91 Patentblatt 91/11**

(84) Benannte Vertragsstaaten:
**BE DE ES FR GB IT LU NL**

(71) Anmelder: **HOECHST AKTIENGESELLSCHAFT**
**Postfach 80 03 20**
**W-6230 Frankfurt am Main 80(DE)**

(72) Erfinder: **Heinze, Jürgen, Prof. Dr.**
**Runzstrasse 65**
**W-7800 Freiburg(DE)**
Erfinder: **Dietrich, Michael**
**Carl-Kistner-Strasse 21**
**W-7800 Freiburg(DE)**

(54) **Intrinsisch elektrisch leitende Polymere, Verfahren zu ihrer Herstellung und ihre Verwendung.**

(57) Bei der Verwendung von bekannten intrinsisch elektrisch leitenden Polymeren als Elektrodenmaterial in reversiblen Ladungsspeichern ergeben sich häufig Nachteile wie eine geringe Zyklenstabilität und eine geringe Ladekapazität. Diese Nachteile lassen sich durch die Verwendung von Poly-(4,4′-dialkoxy-2,2′-bithiophenen) vermeiden, die wesentlich bessere Stabilitäts- und Kapazitätseigenschaften haben.

EP 0 416 567 A2

# INTRINSISCH ELEKTRISCH LEITENDE POLYMERE, VERFAHREN ZU IHRER HERSTELLUNG UND IHRE VERWENDUNG

Die Erfindung betrifft intrinsisch elektrisch leitende Polymere, ihr elektrochemisches und chemisches Herstellungsverfahren sowie ihre Verwendung als Elektrodenmaterial, als Kunststoffadditiv und als Beschichtungsmaterial.

Es ist bekannt, daß sich Heteroaromaten oxidativ durch anodische Oxidation polymerisieren lassen und dabei elektrisch leitende Polymere bilden, die für die Elektrotechnik, bei Halbleiterbauelementen, Schaltern, Abschirmmaterialien, Solarzellen und als Elektrodenmaterialien bei elektrochemischen Synthesen und in reversiblen Ladungsspeichern Interesse besitzen (vgl. z.B. IBM J. Res. Develop. 27 , 330 (1983)).

Die Nachteile von vielen bekannten, elektrisch leitenden Polymeren beim Einsatz als aktive Elektrodenmaterialien in reversiblen Ladungsspeichern bestehen in der geringen Zyklenstabilität bei aufeinanderfolgenden Auf- und Entladezyklen, in der Möglichkeit der Überoxidation sowie in der experimentell beobachteten eingeschränkten Ladekapazität solcher Ladungsspeicher. Beide Eigenschaften sind wesentlich von der Nukleophilie des Lösemittels abhängig, so daß bei der Konstruktion von Polymerbatterien bisher nukleophile Lösemittel und Wasser vermieden wurden.

Es hat sich aber auch gezeigt, daß die Qualitäten der Polymeren vom Typ der eingesetzten Monomeren abhängen. Bei der Verwendung von Polythiophen als aktives Elektrodenmaterial wurde beobachtet, daß sich die Ladekapazität von 10 % auf 20 % des theoretischen Wertes verbessert, wenn als Ausgangsverbindung für die Polymerisation 2,2′-Bithiophen anstelle von Thiophen eingesetzt wird (vgl. Waltman et al., J. Phys. Chem. 87 , 1459 (1983)). Die Verwendung von Polythiophenen, die aus Bithiophenen oder substituierten Derivaten gewonnen werden, ist bekannt (vgl. Chemical Abstracts 108 , 170797f und JP 62/226567).

Aufgabe der vorliegenden Erfindung war es nun, ein elektrisch leitendes Material auf Polythiophenbasis herzustellen, das gegenüber dem Stand der Technik erheblich verbesserte Eigenschaften aufweist und die zuvor erwähnten Nachteile nicht mehr besitzt. Insbesondere sollte auch die Stabilität gegenüber nukleophilen Solventien wie Wasser entscheidend verbessert werden.

Überraschenderweise wurde nun gefunden, daß Poly-(4,4′-dialkoxy-2,2′-bithiophene), die durch elektrochemische oder chemische Polymerisation von 4,4′-Dialkoxy-2,2′-bithiophenen hergestellt wurden, wesentlich bessere Stabilitäts-und Kapazitätseigenschaften aufweisen als alle bekannten Thiophene und daß sie hierin sogar dem Polypyrrol eindeutig überlegen sind. Diese Systeme sind als aktive Batterieelektroden in wasserhaltigen Lösemitteln einsetzbar.

Die Erfindung betrifft somit ein intrinsisch elektrisch leitendes Polymeres, bestehend aus Struktureinheiten, die sich von mindestens einem Monomeren der Formel (I) ableiten

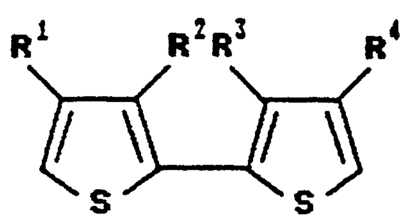

(I),

worin

$R^1$ und $R^4$ unabhängig voneinander eine $C_1$-$C_{12}$-Alkoxygruppe oder $-O(CH_2CH_2O)_nCH_3$ mit $n = 1$ bis 4 und $R^2$ und $R^3$ unabhängig voneinander ein Wasserstoffatom, ein Halogenatom, eine $C_1$-$C_{12}$-Alkyl- oder Aryl-Gruppe bedeuten oder

$R^2$ und $R^3$ unabhängig voneinander eine $C_1$-$C_{12}$-Alkoxygruppe oder $-O(CH_2CH_2O)_nCH_3$ mit $n = 1$ bis 4 und $R^1$ und $R^4$ unabhängig voneinander ein Wasserstoffatom, ein Halogenatom, eine $C_1$-$C_{12}$-Alkyl- oder Arylgruppe bedeuten und

die durch Verknüpfung in 5-Stellung und/oder 5′-Stellung miteinander verbunden sind.

Weiterhin betrifft die Erfindung ein Verfahren zur Herstellung eines intrinsisch elektrisch leitenden Polymeren durch elektrochemische Polymerisation von mindestens einem Monomeren der Formel (I) in Gegenwart eines Leitsalzes, dadurch gekennzeichnet, daß das Elektrolyt-Lösemittel dipolar aprotisch ist, die Reaktionstemperatur im Bereich von -60 °C bis 80 °C liegt und die Monomerkonzentration 0,001 bis 5 mol/dm³ Elektrolyt-Lösemittel beträgt.

Die Erfindung betrifft ebenso ein Verfahren zur Herstellung eines intrinsisch elektrisch leitenden

Polymeren durch chemische Polymerisation von mindestens einem Monomeren der Formel (I) in Gegenwart eines Oxidationsmittels, dadurch gekennzeichnet, daß das Elektrolyt-Lösemittel dipolar aprotisch oder polar protisch ist, die Reaktionstemperatur zwischen der Erstarrungs- und der Siedetemperatur des Lösemittels liegt und die Monomerkonzentration 0,001 bis 5 mol/$dm^3$ Lösemittel beträgt.

Schließlich betrifft die Erfindung die Verwendung eines intrinsisch elektrisch leitenden Polymeren als Elektrodenmaterial in reversiblen Ladungsspeichern mit dipolar aprotischen Elektrolyt-Lösemitteln.

Außerdem betrifft die Erfindung die Verwendung eines intrinsisch elektrisch leitenden Polymeren als Elektrodenmaterial in reversiblen Ladungsspeichern mit polar protischen Elektrolyt-Lösemitteln.

Weiterhin betrifft die Erfindung die Verwendung eines intrinsisch leitenden Polymeren als Elektrodenmaterial für die positive und negative Elektrode in einem Superkondensator, dadurch gekennzeichnet, daß das geladene Polymer als Elektrodenmaterial für die negative Elektrode und das zunächst entladene Polymer als Elektrodenmaterial für die positve Elektrode eingesetzt wird.

Die Erfindung betrifft ebenso die Verwendung eines intrinsisch elektrisch leitenden Polymeren als Kunststoffadditiv und zur Beschichtung von elektrisch leitenden und nicht leitenden Materialien zur Herstellung von Katalysatoren, elektrischen Schaltern, Halbleiterbauteilen, Solarzellen, Abschirmmaterialien, Tarnanstrichen, Flächenheizleitern, Spezialelektroden und antistatischen Folien und Fasern.

Die erfindungsgemäßen Polymeren enthalten Struktureinheiten, welche sich durch Verknüpfung in 5-Stellung und/oder 5'-Stellung von mindestens einem Monomeren der allgemeinen Formel (I) ableiten

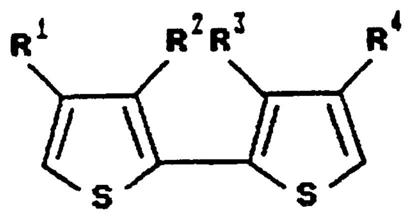

(I),

worin

$R^1$ und $R^4$ unabhängig voneinander eine $C_1$-$C_{12}$-, vorzugsweise $C_1$-$C_4$-, insbesondere $C_1$-$C_2$-Alkoxygruppe oder $-O(CH_2CH_2O)_nCH_3$ mit $n = 1$ bis 4, vorzugsweise 1 oder 2, und

$R^2$ und $R^3$ unabhängig voneinander ein Wasserstoffatom, ein Halogenatom, eine $C_1$-$C_{12}$-Alkyl- oder Arylgruppe, vorzugsweise ein Wasserstoffatom, bedeuten.

Es ist aber auch möglich, daß

$R^2$ und $R^3$ unabhängig voneinander eine $C_1$-$C_{12}$-, vorzugsweise $C_1$-$C_4$-, insbesondere $C_1$-$C_2$-Alkoxygruppe oder $-O(CH_2CH_2O)_nCH_3$ mit $n = 1$ bis 4, vorzugsweise 1 oder 2, und

$R^1$ und $R^4$ unabhängig voneinander ein Wasserstoffatom, ein Halogenatom, eine $C_1$-$C_{12}$-Alkyl- oder Arylgruppe, vorzugsweise ein Wasserstoffatom, bedeuten.

Verbindungen der Formel I sind beispielsweise 3,3'-Dimethoxy-2,2'-bithiophen, 4,4'-Dinethoxy-2,2'-bithiophen, 4,4'-Diethoxy-2,2'-bithiophen, 4,4'-Dihexyloxy-2,2'-bithiophen, 3,3'-Dihexyloxy-2,2'-bithiophen und 4,4'-Didodecyloxy-2,2'-bithiophen, vorzugsweise 3,3'-Dimethoxy-2,2'-bithiophen und 4,4'-Dimethoxy-2,2'-bithiophen, insbesondere 4,4'-Dimethoxy-2,2'-bithiophen. Auch Gemische der Monomeren können eingesetzt werden.

Die elektrisch leitenden Polymeren enthalten in der oxidierten Form zur Kompensation der positiven Ladungen eine entsprechende Zahl von Anionen. Dabei handelt es sich im Falle des elektrochemischen Herstellungsverfahrens um die Anionen des Leitsalzes, im Falle des chemischen Herstellungsverfahrens um die Anionen des chemischen Oxidationsmittels. Geeignete Anionen sind beispielsweise $BF_4^-$, $PF_6^-$, $SbF_6^-$, $SbCl_6^-$, $FeCl_4^-$, $Fe[(CN)_6]^{3-}$, $F^-$, $Cl^-$, $Br^-$, $SCN^-$, $SO_4^{2-}$, $HSO_4^{3-}$, Alkyl-$SO_3^-$, Perfluoroalkyl-$SO_3^-$, Aryl-$SO_3^-$, Alkyl-$CO_2^-$, Perfluoroalkyl-$CO_2^-$, Aryl-$CO_2^-$, $ClO_4^-$, $NO_3^-$ und Phenolat. Bevorzugt werden $PF_6^-$, $BF_4^-$ und $Cl^-$ eingesetzt. Es können auch Gemische der oben genannten, in das Polymere eingebrachten Anionen vorliegen. Die Zahl dieser Anionen beträgt 20 bis 200 %, bezogen auf die Zahl der Monomereinheiten, vorzugsweise 50 bis 100 %.

Die Herstellung der erfindungsgemäßen Polymeren erfolgt durch oxidative Polymerisation, die sowohl elektrochemisch als auch chemisch erfolgen kann. Die beiden Herstellungsverfahren werden im folgenden erläutert:

**Elektrochemisches Herstellungsverfahren**

Bei dem elektrochemischen Verfahren kommen als Anodenmaterial die unter den Bedingungen der anodischen Polymerisation stabilen Materialien wie Edelmetalle, beispielsweise Platin, Gold oder Edelmetall-Legierungen in Betracht. Die Anode wird in Form von Platten oder Blechen eingesetzt, die parallel zur Kathode ausgerichtet sind. Bei Verwendung von zwei Anoden befinden sich diese in gleichem Abstand vor und hinter der Kathode.

Die Kathode besteht aus einem der üblichen Elektrodenmaterialien wie Platin, Gold, Nickel, Kupfer, Silber, Graphit oder Glaskohlenstoff. Sie wird in Form von Platten, Blechen oder Netzen eingesetzt und parallel zur Anode angeordnet. Bei Verwendung von zwei Kathoden befinden sich diese in gleichem Abstand vor und hinter der Anode. Um einen Kurzschluß zu verhindern, kann die Kathode über einen Abstandshalter, der beispielsweise aus einem inerten Kunststoffnetz besteht, von der Anode getrennt werden.

Die elektrochemische Polymerisation des Monomeren wird in einem dipolar aprotischen Elektrolyt-Lösemittel durchgeführt. Dieses soll unter den Bedingungen der elektrochemischen Polymerisation beständig sein und ausreichende Löseeigenschaften für Monomer und Leitsalz besitzen. Geeignete Elektrolyt-Lösemittel sind beispielsweise Acetonitril, Benzonitril, Propylencarbonat, Methylenchlorid, Nitrobenzol, Nitromethan und Schwefeldioxid sowie Gemische dieser Lösemittel, vorzugsweise Methylenchlorid und Propylencarbonat.

Ein Zusatz von weniger als 5 % eines polar aprotischen Lösemittels wie Wasser, Methanol oder der dem Leitsalz zugrundeliegenden Säure kann von Vorteil sein.

Leitsalze werden zum Stromtransport während der elektrochemischen Polymerisation verwendet. Die Anionen der Leitsalze werden in die Polymeren eingebaut und können die Eigenschaften der Polymere wie Thermostabilität und elektrische Leitfähigkeit beeinflussen. Als Leitsalze dienen beispielsweise Tetrafluoroborate, Hexafluoroantimonate, Hexafluoroarsenate, Hexafluorophosphate, Hexachloroantimonate, Perchlorate und Perfluoralkylsulfonate, vorzugsweise Tetrafluoroborate und Hexafluorophosphate. Es können auch Gemische dieser Leitsalze verwendet werden. Besonders bevorzugt sind Tetraalkylammoniumhexafluorophosphate.

Als Kationen für die Leitsalze sind neben den Erdalkalikationen und $H^+$ vor allem die Alkalimetallkationen geeignet. Als besonders günstig erweisen sich Kationen des Typs $R_4N^+$ und $R_4P^+$, worin die Reste R jeweils unabhängig voneinander Wasserstoff, $C_1$-$C_6$-Alkylreste, cycloaliphatische oder aromatische Reste bedeuten. Die Menge an Leitsalz beträgt 0,01 bis 1, vorzugsweise 0,1 bis 0,5 mol/$dm^3$ Lösemittel.

Die Monomerkonzentration beträgt 0,001 bis 5, vorzugsweise 0.01 bis 1 mol/$dm^3$ Elektrolyt-Lösemittel.

Die elektrochemische Polymerisation wird zwischen der Erstarrungs- und der Siedetemperatur des Elektrolyt-Lösemittels, beispielsweise im Bereich von -60 bis +80 °C, vorzugsweise von -20 bis +50 °C, insbesondere von 0 °C bis Raumtemperatur, durchgeführt.

Die Dauer der Elektrolyse hängt von den verwendeten Elektrolysematerialien, den jeweiligen Elektrolysebedingungen und von der eingesetzten Menge der Monomeren ab. Üblicherweise beträgt die Elektrolysedauer 1 bis 12 Stunden, vorzugsweise 2 bis 8 Stunden.

Die elektrochemische Polymerisation kann in den üblichen Elektrolyse-Apparaturen durchgeführt werden. Gut geeignet sind beispielsweise einfache Elektrolyse-Apparaturen, bestehend aus einer ungeteilten Zelle, zwei oder mehr Elektroden und einer externen Strom-Spannungsquelle. Es können aber auch geteilte Zellen mit Diaphragmen oder Ionenaustauschermembranen oder solche mit Referenzelektroden zur exakten Potentialbestimmung eingesetzt werden. Die Messung des Stromverbrauchs ist zweckmäßig, da dies eine Abschätzung der bereits verbrauchten Monomermenge ermöglicht. Eine Elektrolyse-Apparatur, bei der die Kathode flächig am Boden ausgebildet ist und die Anode in Form eines Bandes mit konstantem Vorschub durch den Elektrolyt geführt wird, ermöglicht eine kontinuierliche Verfahrensführung.

Als Strom-Spannungsquelle für den Betrieb der elektrolytischen Zelle, in der das Verfahren durchgeführt wird, eignet sich jede Gleichstrom-Spannungsquelle, die eine hinreichend hohe elektrische Spannung liefert. Die elektrochemische Polymerisation wird mit einer Spannung von 0,1 bis 100 V, vorzugsweise von 1,5 bis 30 V,durchgeführt. Für die Stromdichten haben sich Werte von 0,0002 bis 50 mA/$cm^2$, vorzugsweise 0,001 bis 10 mA/$cm^2$, insbesondere 0.01 bis 1 mA/$cm^2$ spezifischer Oberfläche, als günstig und vorteilhaft erwiesen.

Zur Isolierung und Reinigung der Polymeren werden die Elektrolyse-Rohprodukte gegebenenfalls mitsamt der als Träger dienenden Anode durch Waschen mit Lösemitteln, wie Acetonitril, Methylenchlorid, Ethanol und Wasser, von Leitsalzen, Monomeren und anhaftenden Verunreinigungen befreit.

Nach dem elektrochemischen Herstellungsverfahren sind Ausbeuten von 40 bis 80 % möglich.

**Chemisches Herstellungsverfahren**

Die chemische oxidative Polymerisation der Monomeren wird in einem dipolar aprotischen Lösemittel oder einem polar protischen Lösemittel durchgeführt, das gegenüber dem Oxidationsmittel beständig ist und ausreichende Löseeigenschaften für Monomer und Oxidationsmittel besitzt. Geeignete Lösemittel sind beispielsweise Acetonitril, Benzonitril, Propylencarbonat, Methylenchlorid, Nitromethan, Schwefeldioxid, Methanol und Ethanol sowie Gemische dieser Lösemittel.

Die Monomerkonzentration beträgt 0,001 bis 5, vorzugsweise 0,01 bis 1 mol/dm$^3$ Lösemittel.

Als Oxidationsmittel werden Metallsalze, Nitrosylverbindungen oder Wasserstoffperoxid eingesetzt, beispielsweise $Fe(PF_6)_3$, $Fe(ClO_4)_3$, $Fe(BF_4)_3$, $FeCl_3$, $Cu(PF_6)_2$, $Cu(ClO_4)_2$, $Cu(BF_4)_2$, $CuCl_2$, $K_3(Fe(CN)_6)$, $RuCl_3$, $MoCl_5$, $WCl_6$, $NOBF_4$, $NOPF_6$, $NOClO_4$, $NOPF_6$ und $H_2O_2$, vorzugsweise $FeCl_3$.

Das Verhältnis der Konzentration von Oxidationsmittel zu Monomer beträgt 0,1 bis 10, vorzugsweise 0,5 bis 2,5.

Die chemische Polymerisation wird zwischen der Erstarrungs-und der Siedetemperatur des Lösemittels, vorzugsweise im Temperaturbereich von 0 °C bis Raumtemperatur durchgeführt.

Nach dem chemischen Herstellungsverfahren sind Ausbeuten von 30 bis 90% möglich.

## Eigenschaften der Polymere

Im Gegensatz zu den bekannten elektrisch leitenden Polymeren lassen sich die erfindungsgemäßen Polymeren im coulometrischen Langzeitexperiment in aprotischen Lösemitteln wie Methylenchlorid, bis zu einem Beladungsgrad von 100 mol-%, bezogen auf das Bithiophenmonomer, ohne nennenswerten Ladungsverlust reversibel zyklisieren. Selbst Beladungsgrade von 200 mol-% sind mit verhältnismäßig geringen Ladungsverlusten (4 - 5 % pro Zyklus) möglich. Diese ungewöhnliche Stabilität wird weiterhin durch coulometrische Langzeitexperimente in wäßrigen KCl-Lösungen bestätigt, bei denen sich die Polymeren bis zu einem Beladungsgrad von ca. 40 mol-% mit nur geringen Ladungsverlusten zyklisieren lassen.

Da sich die Beladung des Polymers über einen ungewöhnlich großen Potentialbereich von -1,0 V bis +1,8 V, bezogen auf eine wäßrige Ag/AgCl-Referenzelektrode (das entspricht einer Veränderung von 2,8 V), ohne nennenswerte Überoxidationseffekte durchführen läßt, eignen sich die Polymere hervorragend als Elektrodenmaterial in einem Superkondensator.

Die Erfindung wird durch die nachfolgenden Beispiele näher erläutert. Die in den Beispielen angegebenen Prozente beziehen sich, sofern nicht anders vermerkt, auf das Gewicht.

Im Vergleichsbeispiel A werden Polymere gemäß dem Stand der Technik hergestellt, deren Stabilitäts- und Beladungseigenschaften erheblich schlechter waren als die von Polymeren, die aus Monomeren gemäß Formel (I) erhalten wurden.

## Beispiele

### Beispiel 1

3,0 g Tetrabutylammoniumhexafluorophosphat, 0,2 g 4,4′-Dimethoxy-2,2′-bithiophen und 38 g Methylenchlorid wurden in eine mit einer Glasfritte geteilten Elektrolysezelle mit Kühlmantel gegeben. Zur exakten Potentialbestimmung wurde eine Dreielektrodenanordnung gewählt, wobei ein mit AgCl beschichteter Ag-Draht als Referenzelektrode diente. Die Kathode bestand aus einem runden Platinnetz mit einem Durchmesser von 20 mm. Als Anode diente ein Platinblech von 30 mm Länge und 10 mm Breite. Bei einer Temperatur von 0 °C wurde potentiostatisch bei +1,8 V elektrolysiert. Dabei stellte sich ein Strom von 6 mA ein. Nach 3 Stunden wurde die Elektrolyse abgebrochen, das entstandene Polymere auf dem Träger mit Wasser und Methylenchlorid gewaschen und im Hochvakuum getrocknet. Es wurden 0,08 g eines schwarzen Pulvers erhalten. Die Stromausbeute betrug bei dieser Reaktion 39 %. Die Auger-Spektroskopie, die an dem Pulver durchgeführt wurde, lieferte folgende Werte: 37,2 % P und 60,9 % S. Daraus ergibt sich ein Beladungsgrad des Polymeren von 120 mol-%.

### Beispiel 2

Zu einer Lösung von 2,5 g $FeCl_3$ in 25 g Ethanol wurde bei Raumtemperatur innerhalb von 15 Minuten eine Lösung von 1 g 4,4′-Dimethoxy-2,2′-bithiophen in 60 Teilen Ethanol zugegeben. Nach 1-stündigem

Rühren wurde abfiltriert und der erhaltene schwarze Filterrückstand mehrmals mit je 25 g Ethanol gewaschen. Nach dem Trocknen im Hochvakuum verblieb ein schwarzes Pulver, das nach der Elementaranalyse einen Beladungsgrad von 50 mol-% aufwies.
Die Ausbeute der Reaktion betrug 70 %.

**Beispiel 3**

Das im Beispiel 1 hergestellte Polymere wurde auf dem Träger in einer geteilten Meßzelle mit Dreielektrodenanordnung gemäß Beispiel 1 bei einer Temperatur von 0 °C im Potentialbereich zwischen -1,0 V und +1,8 V mit 0,5 mV/s 48 Stunden lang zyklisiert. Als Elektrolyt-Lösemittel dienten 38 g Methylenchlorid, in denen 3 g Tetrabutylammoniumhexafluorophosphat gelöst waren. Es ergab sich ein Ladungsverlust von 0,16 % pro Zyklus. Die coulometrische Analyse ergab einen Beladungsgrad von 132 mol-% bei +1,8 V. Dies entsprach einer Beladekapazität von 156 Ah/kg, bezogen auf das undotierte Polymere, und 85 Ah/kg, bezogen auf das dotierte Polymere.

**Beispiel 4**

Das im Beispiel 1 hergestellte Polymere wurde auf dem Träger in einer geteilten Meßzelle mit Dreielektrodenanordnung gemäß Beispiel 1 bei einer Temperatur von 0 °C im Potentialbereich zwischen -1,0 V und +1,6 V mit 0,5 mV/s 48 Stunden lang zyklisiert. Als Elektrolyt-Lösemittel dienten 38 g Methylenchlorid, in denen 3 g Tetrabutylammoniumhexafluorophosphat gelöst waren. Es ergab sich ein Ladungsverlust von weniger als 0,1 % pro Zyklus. Die coulometrische Analyse ergab einen Beladungsgrad von 100 mol-% bei +1,6 V. Dies entsprach einer Beladekapazität von 118 Ah/kg, bezogen auf das undotierte Polymere, und 72 Ah/kg, bezogen auf das dotierte Polymere.

**Beispiel 5**

Das im Beispiel 1 hergestellte Polymere wurde auf dem Träger in einer geteilten Meßzelle mit Dreielektrodenanordnung gemäß Beispiel 1 bei einer Temperatur von 0 °C im Potentialbereich von -1,2 V bis +2,6 V mit 5 mV/s 4 Stunden lang zyklisiert. Als Elektrolyt-Lösemittel dienten 38 g Methylenchlorid, in denen 3 g Tetrabutylammoniumhexafluorophosphat gelöst waren. Es ergab sich ein Ladungsverlust von 5 % pro Zyklus. Die coulometrische Analyse ergab einen Beladungsgrad von 200 mol-% bei 2,6 V. Dies entsprach einer Beladekapazität von 238 Ah/kg, bezogen auf das undotierte Polymere, und 105 Ah/kg, bezogen auf das dotierte Polymere.

**Beispiel 6**

Das im Beispiel 1 hergestellte Polymere wurde auf dem Träger in einer geteilten Meßzelle mit Dreielektrodenanordnung gemäß Beispiel 1 bei einer Temperatur von 20 °C im Potentialbereich zwischen -0,5 V und +0,55 V mit 2 mV/s 48 Stunden lang zyklisiert. Als Elektrolyt-Lösemittel dienten 50 g $H_2O$, in denen 0,7 g KCl gelöst waren. Es ergab sich ein Ladungsverlust von weniger als 0,1 % pro Zyklus. Der Beladungsgrad bei +0,55 V betrug 40 mol-%.

**Vergleichsbeispiel A**

3,0 g Tetrabutylammoniumhexafluorophosphat, 0,1 g 2,2′-Bithiophen und 38 g Methylenchlorid wurden in eine mit einer Glasfritte geteilten Elektrolysezelle mit Kühlmantel gegeben. Zur exakten Potentialbestimmung wurde eine Dreielektrodenanordnung gewählt, wobei ein mit AgCl beschichteter Ag-Draht als Referenzelektrode diente. Die Kathode bestand aus einem runden Platinnetz mit einem Durchmesser von 20 mm. Als Anode diente ein Platinblech von 30 mm Länge und 10 mm Breite. Bei einer Temperatur von 0 °C wurde potentiostatisch bei +2,29 V elektrolysiert. Dabei stellte sich ein Strom von 2 mA ein. Nach einer Stunde wurde die Elektrolyse abgebrochen, das entstandene Polymere auf dem Träger mit Methylenchlorid gewaschen und im Hochvakuum getrocknet. Es wurden 0,007 g Polythiophen erhalten.

Das Polymere wurde auf dem Träger in einer geteilten Meßzelle mit Dreielektrodenanordnung bei einer Temperatur von 0°C im Potentialbereich von -0,66 V bis +2.29 V mit 1 mV/s 48 Stunden lang zyklisiert. Als Elektrolyt-Lösemittel dienten 38 g Methylenchlorid, in denen 3 g Tetrabutylammoniumhexafluorophosphat gelöst waren. Es ergab sich ein Ladungsverlust von 1,3 % pro Zyklus. Die coulometrische Analyse ergab einen Beladungsgrad bei 2,29 V von 100 mol-%, bezogen auf das Bithiophenmonomer. Dies entsprach einer Beladekapazität von 161 Ah/kg, bezogen auf das undotierte Polymere, und 86 Ah/kg, bezogen auf das dotierte Polymere.

## Ansprüche

1. Intrinsisch elektrisch leitendes Polymeres, bestehend aus Struktureinheiten, die sich von mindestens einem Monomeren der Formel (I) ableiten

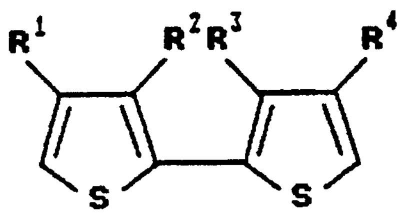

(I),

worin
$R^1$ und $R^4$ unabhängig voneinander eine $C_1$-$C_{12}$-Alkoxygruppe oder $-O(CH_2CH_2O)_nCH_3$ mit n = 1 bis 4 und $R^2$ und $R^3$ unabhängig voneinander ein Wasserstoffatom, ein Halogenatom, eine $C_1$-$C_{12}$-Alkyl- oder Aryl-Gruppe bedeuten oder
$R^2$ und $R^3$ unabhängig voneinander eine $C_1$-$C_{12}$-Alkoxygruppe oder $-O(CH_2CH_2O)_nCH_3$ mit n = 1 bis 4 und $R^1$ und $R^4$ unabhängig voneinander ein Wasserstoffatom, ein Halogenatom, eine $C_1$-$C_{12}$-Alkyl- oder Arylgruppe bedeuten und
die durch Verknüpfung in 5-Stellung und/oder 5'-Stellung miteinander verbunden sind.

2. Intrinsisch elektrisch leitendes Polymeres nach Anspruch 1, dadurch gekennzeichnet, daß das Monomere der Formel (I) 4,4'-Dimethoxy-2,2'-bithiophen ist.

3. Verfahren zur Herstellung eines intrinsisch elektrisch leitenden Polymeren nach Anspruch 1 durch elektrochemische Polymerisation von mindestens einem Monomeren der Formel (I) in Gegenwart eines Leitsalzes, dadurch gekennzeichnet, daß das Elektrolyt-Lösemittel dipolar aprotisch ist, die Reaktionstemperatur im Bereich von -60°C bis 80°C liegt und die Monomerkonzentration 0,001 bis 5 mol/$dm^3$ Elektrolyt-Lösemittel beträgt.

4. Verfahren zur Herstellung eines intrinsisch elektrisch leitenden Polymeren nach Anspruch 1 durch chemische Polymerisation von mindestens einem Monomeren der Formel (I) in Gegenwart eines Oxidationsmittels, dadurch gekennzeichnet, daß das Elektrolyt-Lösemittel dipolar aprotisch oder polar protisch ist, die Reaktionstemperatur zwischen der Erstarrungs- und der Siedetemperatur des Lösemittels liegt und die Monomerkonzentration 0,001 bis 5 mol/$dm^3$ Lösemittel beträgt.

5. Verwendung eines intrinsisch elektrisch leitenden Polymeren nach Anspruch 1 als Elektrodenmaterial in reversiblen Ladungsspeichern mit dipolar aprotischen Elektrolyt-Lösemitteln.

6. Verwendung eines intrinsisch elektrisch leitenden Polymeren nach Anspruch 1 als Elektrodenmaterial in reversiblen Ladungsspeichern mit polar protischen Elektrolyt-Lösemitteln.

7. Verwendung eines intrinsisch leitenden Polymeren nach Anspruch 1 als Elektrodenmaterial für die positive und negative Elektrode in einem Superkondensator, dadurch gekennzeichnet, daß das geladene Polymer als Elektrodenmaterial für die negative Elektrode und das zunächst entladene Polymer als Elektrodenmaterial für die positive Elektrode eingesetzt wird.

8. Verwendung eines intrinsisch elektrisch leitenden Polymeren nach Anspruch 1 als Kunststoffadditiv und zur Beschichtung von elektrisch leitenden und nicht leitenden Materialien zur Herstellung von Katalysatoren, elektrischen Schaltern, Halbleiterbauteilen, Solarzellen, Abschirmmaterialien, Tarnanstrichen, Flächenheizleitern, Spezialelektroden und antistatischen Folien und Fasern.